# EUROPEAN PATENT APPLICATION

(11) **EP 0 543 628 A1**
(43) Date of publication of application: **26.05.1993**
(21) Application number: 92310503.5
(22) Date of filing: 18.11.1992
(51) Int. Cl.: B26B 7/00, A21C 15/04, A21C 11/10, B26D 7/08

(54) **Food processing**

(30) Priority: 21.11.1991 GB 9124762
(71) Applicant: UNILEVER PLC, London EC4P 4BQ (GB); UNILEVER N.V., NL-3013 AL Rotterdam (NL)
(72) Inventor: Haydock, David, Unilever Research Colworth Lab., Sharnbrook, Bedford MK44 1LQ (GB); Wooten, Alan, Unilever Research Colworth Lab., Sharnbrook, Bedford MK44 1LQ (GB)
(74) Representative: Roscoe, Brian Corrie

(57) **Abstract**

Anisotropic, composite food products are ultrasonically cut using a cutting blade frequency of 10-60 kHz and a cutting blade amplitude of 20 -200 µm.

## Description

The present invention relates to a process of ultrasonic cutting of foodstuffs.

It is known from French Patent Specification FR-A-2,620,071 (Mecasonic S.A.) to cut deep-frozen foods, especially deep-frozen cake material in the mould by ultrasonic cutting, using a long thin blade which is vibrated by means of a vibrator, which in turn is driven by a high frequency generator operating at 18 to 50 kHz. The length of the blade exceeds the total diameter of the product to be cut and it can have a thickness of 2.5 mm and cutting depth of 80 to 120 mm.

In American Patent Specification US-A-3,817,141 (S.T. Simonetti) an ultrasonically driven series of knives is used for cutting of soft yielding bakery products, including doughs and baked goods. The frequency of the knife blades is from 15 to 60 kHz and the length of the cutting blades in the longitudinal direction is substantially equal to an integral number of half wavelengths at the frequency the knife blades are driven.

In all these cutting processes, however, homogeneous foodstuffs are cut, in other words: the material is either frozen and all components have the same hardness, or the material is almost isotropic.

It is known, however, that if the material is non-frozen or partially frozen, but not deep-frozen and composite, i.e. composed of different materials having different viscosities and/or hardness, the cutting in general is fairly difficult if at all possible, because of the fact that the material to be cut is either pushed away under the pressure of the knife, or strongly and permanently deformed. A laminated product consisting of alternating layers of whipped cream and cake, particularly a baked material having a relatively high hardness (e.g. cream slices), upon cutting almost invariably leads to a permanent deformation of the structure and considerable smearing of the cutting knife.

It has now surprisingly been found, that anisotropic, composite foodstuffs can be cut without any difficulty, if the cutting blade is brought into ultrasonic vibration.

Therefore the present invention relates to a process of ultrasonic cutting of foodstuffs, which is characterized in that anisotropic, composite foodstuffs are cut using a cutting blade frequency of from 10 to 60 kHz and a cutting blade amplitude of from 20 to 200 µm, preferably from 30 µm. Preferably the cutting blade has a frequency of from 20 to 40 kHz and an amplitude of from 40 to 60 µm.

The cutting blade is brought into ultrasonic vibration by connecting it to high frequency generator via a vibrator. The cutting blade may have at least one cutting edge, but by using for example a star-shaped cutting blade, the foodstuff may in one operation be cut into several portions. Generally the cutting direction is along a verical axis which is perpendicular to the foodstuff, but the foodstuff may also be cut at an angle with the horizontal.
The foodstuffs to be cut are anisotropic, composite foodstuffs, such as laminated products, in which layers of bakery products are alternated with layers of whipped cream, cake frosting, ice cream or confectionary products. Also co-extruded foodstuffs comprising layers, of various, different foodstuffs having different degrees of hardness may be cut in this way. Examples of such products are filled dough products, filled ice cream based products, and the like. Also snack products, bakery products and meals may be cut according to the present invention.

The depth over which the product may be cut can vary, but in general this may be as much as 150 mm or even more.

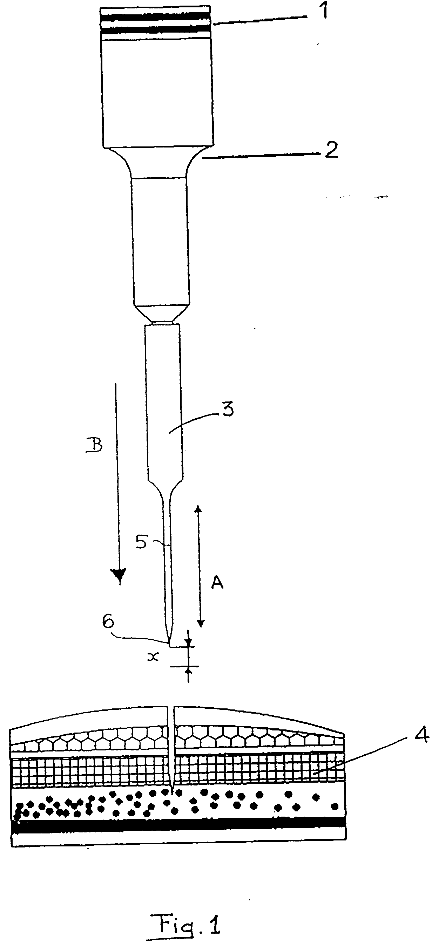

The invention will now be further elucidated on hand of the Figure 1 in which a schematic drawing has been given of the cutting of an anisotropic, composite foodstuff 4 by an ultrasonic cutting knife 3 of which the cutting blade 5 is passing into the product 4, which product is actually cut by the cutting edge 6, and in which the cutting direction has been indicated by the arrow B and the plane of vibration with amplitude x has been indicated by arrow A. The ultrasonic cutting knife 3, which may have any suitable form is brought into ultrasonic vibration by means of the combination of transducer 1 and booster 2 which may serve to increase the amplitude. In general a suitable ultrasound generator, yielding a frequency of from 10 to 60 kHz will be suitable. The invention will now be illustrated on hand of the following examples.

### Example I

An aluminium cutting knife having a thickness of 25 mm at the point of connection to the booster 2 (see Figure 1) which thickness taped down to 5 mm for the cutting blade 5, of which the length was a quarter of a wavelength and the width 300 mm, was used in combination with a booster, which in this case was a 1:1 booster, its only function therefore being to transmit the ultrasonic wave. The booster was coupled to a piezo electric transducer with a 12-15 microns amplitude. The amplitude applied to this blade was about 12 microns, whereas the amplitude of the cutting blade tip was 45 microns. A frequency of 20 kHz was used.
The knife was used to cut Viennetta (Trade Mark; an ice cream product ex Unilever, consisting of alternating thin layers of chocolate and ice cream) at a temperature of -20°C to -5°C with a cutting velocity of 6 m/min. Homogeneous sharp cuts were obtained in which the structure of the product adjacent to the plane of cutting remained totally undisturbed. The portions severed off had a complete intact structure and showed no deformation.

### Examples II-V

In the same way as described in Example I the following products were cut with the apparatus of Example I:
II Sky bar (Trade Mark; a chocolate coated round ice cream product with an inner core of aerated chocolate, ex Birds Eye Walls, UK).
III Filled pasta. A roulade type pasta product with a soft spinach sauce filling with a diameter of about 70 mm.
IV Rum barbar. A soft cake of about 40 mm diameter and 40 mm high. The cake was filled with cream and soaked in a sticky rum sauce, producing a very soft, sticky and delicate laminated cake product which normally is very difficult to handle and cut.
V Cream slice. This consisted of a laminate of alternating layers of cream and puff pastry.

The various products were sliced at speeds and temperatures as indicated below, using the apparatus as described in Example I.

| Example | Temperature (°C) | Cutting speed (m/min) |
|---|---|---|
| II | -20° to -5° | 6 |
| III | 0° to 5° | 6 |
| IV | 5° | 6 |
| V | 5° | 3 |

In all examples the ultrasonic cutting effected a neat cut without distortion of the product. Even in examples IV and V, products which are normally hard to cut without entirely damaging the structure of the product, now totally undamaged and non-distorted separate cut-off pieces were obtained.

## Claims

1. A process of ultrasonic cutting of foodstuffs, characterised in that anisotropic, composite foodstuffs are cut, using a cutting blade frequency of from 10 to 60 kHz and a cutting blade amplitude of from 20 to 200 µm.

2. A process according to claim 1, characterised in that the cutting blade frequency is from 20 to 40 kHz.

3. A process according to claim 1, characterised in that the cutting blade amplitude is from 40 to 60 µm.

4. A process according to claim 1, characterised in that the anisotropic, composite foodstuff is selected from the group consisting of ice cream comprising products, confectionery products, bakery products, snack products, meals, and combinations thereof.
